# EUROPÄISCHE PATENTANMELDUNG

(11) **EP 2 441 545 A1**
(43) Veröffentlichungstag der Anmeldung: **18.04.2012**
(21) Anmeldenummer: 11184877.6
(22) Anmeldetag: 12.10.2011
(51) Int. Cl.: B23K 1/008, B23K 1/00, B23K 1/012, F16B 5/08, B32B 15/14

(54) **Verfahren zum Herstellen eines Verbundwerkstoffs und Verbundwerkstoff**

(30) Priorität: 12.10.2010 DE 102010042294
(71) Anmelder: Behr GmbH & Co. KG, 70469 Stuttgart (DE)
(72) Erfinder: Englert, Peter, 74177 Bad Friedrichshall (DE); Trautwein, Ingo, 74321 Bietigheim-Bissingen (DE); Scheck, Peter, 71229 Leonberg (DE); Andic, Müjdat, 71083 Herrenberg (DE)
(74) Vertreter: Grauel, Andreas

(57) **Zusammenfassung**

Die vorliegende Erfindung betrifft ein Verfahren zum Herstellen eines Verbundwerkstoffs. Das Verfahren umfasst einen Schritt des Bereitstellens eines ersten Blechs (110) aus einem Metall mit einer auf einer Hauptoberfläche des ersten Blechs (110) aufgebrachten Lotplattierung (140), einen Schritt des Bereitstellens eines zweiten Blechs (130) aus dem Metall mit einer auf einer Hauptoberfläche des zweiten Blechs (130) aufgebrachten Lotplattierung (140), einen Schritt des Bereitstellens einer Schicht aus Fasern (120), einen Schritt des Anordnens des ersten Blechs (110), des zweiten Blechs (130) und der Schicht aus Fasern (120) in einen Stapel (100), derart dass die Schicht aus Fasern (120) zwischen der Lotplattierung (140) des ersten Blechs (110) und der Lotplattierung (140) des zweiten Blechs (130) angeordnet wird, und einen Schritt des Verlötens der Lotplattierung (140) des ersten Blechs (110) und der Lotplattierung (140) des zweiten Blechs (130), so dass die Fasern (120) stoffschlüssig mit dem ersten Blech (110) und dem zweiten Blech (130) verbunden werden, um den Verbundwerkstoff herzustellen.

## Beschreibung

Die vorliegende Erfindung bezieht sich auf ein Verfahren zum Herstellen eines Verbundwerkstoffs und einen gemäß diesem Verfahren hergestellten Verbundwerkstoff.

Der größte Teil der Struktur heutiger Verkehrsflugzeuge wird aus Aluminiumblechen verschiedener Stärken und Legierungen genietet. Jedoch wird Aluminium bei den neusten Modellen (z.B. Boeing 787, Airbus A350) größtenteils durch Polymer-Faserverbundwerkstoffe, zum Beispiel den noch leichteren kohlenstofffaserverstärkten Kunststoff (CFK), verdrängt.

Aus der stofflichen Einteilung der Werkstoffe in polymere Werkstoffe (Kunststoffe), metallische, keramische und organische Werkstoffe ergeben sich die grundsätzlichen Kombinationsmöglichkeiten für Verbundwerkstoffe. Dabei wird anwendungsspezifisch versucht, die unterschiedlichen Vorteile der einzelnen Werkstoffe im Endwerkstoff zu kombinieren und die Nachteile auszuschließen.

Bei den bekannten Faserverbundwerkstoffen werden keramische Fasern oder Kohlenstofffasern in Polymere als Matrix eingebettet. Auch besteht eine Möglichkeit der Einbettung von keramischen Fasern in Gussaluminium.

Die DIE 26 14 872 B2 offenbart ein Verfahren zum Verbinden von Aluminiumkomponenten mit einer Aluminiumlotlegierung mit einem Schmelzpunkt unter dem der Aluminiumkomponenten,

Es ist die Aufgabe der vorliegenden Erfindung, ein verbessertes Verfahren zum Herstellen eines Verbundwerkstoffs und einen verbesserten Verbundwerkstoff zu schaffen.

Diese Aufgabe wird durch ein Verfahren zum Herstellen eines Verbundwerkstoffs sowie einen Verbundwerkstoff gemäß den unabhängigen Ansprüchen gelöst.

Der vorliegenden Erfindung liegt die Erkenntnis zugrunde, dass mit einem hier vorgestellten Herstellungsverfahren, das einen Lötprozess zur Herstellung eines Faserverbundwerkstoffs einsetzt, ein neuartiger Leichtmetallwerkstoff realisiert werden kann, der bei geringem spezifischen Gewicht reißfest und extrem zugfest ist. Weiterhin kann der so hergestellte Faserverbundwerkstoff rein metallisch sein und in einer Sandwichstruktur mit sehr dünnen Edelstahlfasern zwischen Blechen aus einer hochfesten Aluminiumknetlegierung aufgebaut sein.

Vorteilhafterweise kann so im Gegensatz zu den bekannten Faserverbundwerkstoffe mit Polymeren als Matrix und Glasfasern oder anderen keramischen Fasern oder faserverstärktem Beton ein Hybridmaterial realisiert werden, das rein metallisch sein kann und im Gegensatz zu Werkstoffen, bei denen Kunststoffe als Matrix verwendet werden, temperaturbeständig ist. Somit wird eine Darstellung hochfester dünnwandiger Aluminiumbauteile aus Aluminiumknetlegierungen ermöglicht. ln diesem Zusammenhang ist auch eine Laminierung komplexer vorgeformter Aluminiumbauteile möglich, wobei dünne Aluminiumbleche vorgeformt und dann als Sandwich mit Gewebe aufgebaut werden können.

Durch seine geringe Dichte wird Aluminium gern dort verwendet, wo es auf die Masse ankommt, die zum Beispiel bei Transportmitteln zum geringeren Treibstoffverbrauch beiträgt, vor allem in der Luft- und Raumfahrt. Auch im Fahrzeugbau gewann es aus diesem Grund an Bedeutung. Stahl steht insbesondere in der Automobilindustrie in direkter Konkurrenz mit Werkstoffen mit geringerer Dichte, wie Aluminium, Magnesium, Kunststoffen und Faserverbundwerkstoffen. Polymere Faserverbundwerkstoffe haben zwar wesentlich höhere Festigkeiten (Zugfestigkeit, E-Modul) in Faserrichtung, die Konstruktion und Verarbeitung ist jedoch vollkommen anders als bei metallischen Werkstoffen.

Ein Verbundwerkstoff oder Kompositwerkstoff ist ein Werkstoff aus zwei oder mehr verbundenen Materialien. Der Verbundwerkstoff besitzt andere Werkstoffeigenschaften als seine einzelnen Komponenten. Für die Eigenschaften der Verbundwerkstofie sind stoffliche Eigenschaften und Geometrie der Komponenten von Bedeutung. lnsbesondere spielen oft Größeneffekte eine Rolle. Die Verbindung erfolgt durch Stoff- oder Formschluss oder eine Kombination von beidem. Nach der Geometrie des Verbunds unterscheidet man zwischen Teilchenverbundwerkstoffen, auch als Dispersionswerkstoffe bezeichnet, Faserverbundwerkstoffen, Schichtverbundwerkstoffen, auch als Laminate bezeichnet, und Durchdringungsverbundwerkstoffen.

Die Komponenten eines Verbundwerkstoffs können dabei selbst wieder Verbundwerkstoffe sein. Bei Teilchen- und Faserverbundwerkstoffen sind Teilchen bzw. Fasern in eine andere Komponente des Verbundwerkstoffes, die so genannte Matrix eingebettet. In Faserverbundwerkstoffen können die Fasern in einer oder mehreren bestimmten Richtungen verlaufen bzw. Vorzugsrichtungen haben. Faserverbundwerkstoffe können schichtweise hergestellt werden, sind dadurch aber noch keine Schichtverbundwerkstoffe, wenn die aufeinanderfolgenden Schichten gleichartig sind. Der Begriff Laminat wird hier allerdings auch verwendet. Schichtverbundwerkstoffe bestehen aus aufeinanderliegenden Schichten unterschiedlicher Anzahl. Der Spezialfall von drei Schichten, davon zwei identischen Außenschichten, wird auch als Sandwichverbund bezeichnet.

Im Unterschied zu gängigen Verbundwerkstoffen, wie zum Beispiel Stahlbeton, wird mit der Einführung extrem dünner Fasern, z.B. mit Durchmessern im µm-Bereich, unter Anderem der Effekt der spezifischen Festigkeit genutzt. Dieser Zusammenhang wurde in den zwanziger Jahren der 20. Jahrhunderts von Alan Arnold Griffith entdeckt und lautet:

Ein Werkstoff in Faserform hat in Faserrichtung eine vielfach größere Festigkeit als dasselbe Material in anderer Form. Je dünner die Faser ist, desto größer ist ihre Festigkeit.

Die Ursache hierfür liegt in einer zunehmenden Gleichrichtung der Molekülketten mit abnehmender zur Verfügung stehender Flache. Zudem werden zum Bruch führende Fehlstellen, wie sie in der "Weakest-Link-Theory" benannt sind, im Material auf sehr große Abstände verteilt, sodass die Fasern weitgehend frei von Fehlstellen sind, die einen Bruch verursachen können. Da bei gleicher Festigkeit die schwere, Komponente eingespart und durch eine leichtere ersetzt werden kann, entsteht ein Werkstoff mit einer hohen spezifischen Festigkeit. Die spezifische Festigkeit beschreibt das Verhältnis aus Festigkeit und Gewicht eines Stoffes. Außerdem führt ein Fehler im Material nicht zum Versagen des gesamten Bauteils, sondern vorerst nur zum Bruch einer einzelnen Faser im Verbund. Da die Fasern je nach Beanspruchung ausgerichtet und in ihrer Dichte, also ihrer Anzahl pro zur Verfügung stehender Fläche, angepasst werden können, entstehen mit Hilfe entsprechender Herstellungsverfahren maßgeschneiderte Bauteile. Um die Festigkeit in verschiedene Richtungen zu beeinflussen, werden statt einzelner Fasern Gewebe oder Gelege verwendet, die vor dem Kontakt mit der Matrix hergestellt werden.

lm Hinblick auf Herstellungsverfahren für Verbundwerkstoffe wird beispielsweise eine stoffschlüssige Verbindung von Aluminium und Edelstahl durch sogenannte Schweißtötverfahren erreicht. Hierbei werden Aluminiumbleche mit Stahlbauteilen gefügt. Das Aluminium wird geschmolzen und in die Stahloberfläche eindiffundiert.

Zum Hartlöten lotplattierter Einzelteile insbesondere für Wärmetauscher, d.h. z.B. von Kühlern, Verdampfern, Kondensatoren etc. wie sie in der Automobilbranche verwendet werden, ist es bei Verwendung von Aluminium bzw. Aluminiumlegierungen als Grundmaterial derzeit üblich, spezielle Lötverfahren einzusetzen. Wegen der speziellen Materiaieigenschaften des Aluminiums bzw, der Aluminiumlegierungen ist bei den verwendeten Lötverfahren das Aufbringen eines nicht korrosiven, nicht hygroskopischen Ftussmittets notwendig, Im Beispiel einer CAB-Lötung wird dafür ein Flussmittel auf der Basis von Kaliumfluoraluminat mit der Summenformel K(1 -3)AIF(4-6) verwendet. Dieses Flussmittel liegt als Eutektikum vor, schmilzt bei einer Temperatur von 562°C bis 572°C und entfernt das auf den Metalloberflächen stets als Obedlächenverunreinigung vorhandene (Aluminium) Oxid bzw. Aluminium-Oxid. Dadurch wird für kurze Zeit die Oberfläche des Metalls weiteren Bearbeitungsschritten, wie dem Hartlöten, zugänglich gemacht, was man fachspezifisch auch mit "Aktivierung der Oberfläche" bezeichnet,

Die vorliegende Erfindung ein Verfahren zum Herstellen eines Verbundwerkstoffs, mit folgenden Schritten:

Bereitstellen eines ersten Blechs aus einem Metall mit einer auf einer Hauptoberfläche des ersten Blechs aufgebrachten Lotplattierung;

Bereitstellen eines zweiten Blechs aus dem Metall mit einer auf einer Hauptoberfläche des zweiten Blechs aufgebrachten Lotplattierung;

Bereitstellen einer Schicht aus Fasern;

Anordnen des ersten Blechs, des zweiten Blechs und der Schicht aus Fasern in einen Stapel, derart dass die Schicht aus Fasern zwischen der Lotplatierung des ersten Blechs und der Lotplattierung des zweiten Blechs angeordnet wird; und

Verlöten der Lotplattierung des ersten Blechs und der Lotplattierung des zweiten Blechs, so dass die Fasern stoffschlüssig mit dem ersten Blech und dem zweiten Blech verbunden werden, um den Verbundwerkstoff herzustellen,

Bei dem Verfahren können Schichten von Fasern aus einem Material und Schichten von Platten aus einem anderen Material stapelartig aufeinander angeordnet und fest miteinander verbunden werden, Die Lotplattierungen des ersten und zweiten Blechs können aus demselben Lotmaterial bestehen. Beispielsweise kann es sich bei dem Lotmaterial um Silizium-Aluminium handeln. Die Lotplattierungen können als dünne Schicht auf die Hauptoberfläche des ersten und zweiten Blechs aufgepresst sein. Die Fasern können extrem dünn sein, beispielsweise einen Durchmesse von lediglich 30µm aufweisen, und zur Bildung der Schicht parallel zueinander oder überkreuz oder auch ungeordnet angeordnet sein. Beispielsweise kann bei dem Anordnen zuerst das erste Blech angeordnet werden, darauf die Schicht aus Fasern gelegt werden und abschließend das zweite Blech auf die Schicht aus Fasern aufgelegt werden. Das Verlöten kann beispielsweise in einem Ofen vorgenommen werden, in den der Stapel aus Blechen und Fasern eingebracht wird. Der Ofen kann auf eine Temperatur gebracht werden, die über dem Schmelzpunkt der Lotplattierungen und unter dem Schmelzpunkt des Materials der Bleche und des Materials der Fasern liegt. Auf diese Weise können die Lotpiattierungen geschmolzen und verflüssigt werden, so dass das Lotplattierungsmaterial alle Zwischenräume zwischen den Blechen und den Fasern umfließen und schließen kann. Nach dem Aushärten des Stapels können dann die beiden Bleche fest miteinander verbunden und die Schicht aus Fasern stoffschlüssig in die Stapelanordnung eingebunden sein.

Gemäß einer Ausführungsform kann der Schritt des Verlötens in Form eines Schutzgas-Hartlötprozesses erfolgen. Beispielsweise kann der Schritt des Verlötens erfolgen, indem der Materialstapel durch einen Durchlaufofen geleitet wird, in dem Schutzgasatmosphäre besteht und dessen Muffel auf Temperatur von > 450°C erhitzt wird. Dies bietet den Vorteil, dass die resultierende Lotverbindung besonders stabil und korrosionsfrei ist.

Gemäß einer weiteren Ausführungsform kann in dem Schritt des Bereitstellens des ersten Blechs das erste Blech ferner mit einer auf einer gegenüberliegenden Hauptoberfläche aufgebrachten weiteren Lotplattierung bereitgestellt werden. Ferner kann das Verfahren einen Schritt des Bereitstellens eines dritten Blechs aus dem Metall mit einer auf einer Hauptoberfläche des dritten Blechs aufgebrachten Lotplattierung und einen Schritt des Bereitstellens einer weiteren Schicht aus Fasern aufweisen. Entsprechend kann in dem Schritt des Anordnens der Stapel um das dritte Blech und die weitere Schicht aus Fasern erweitert werden, indem die weitere Schicht aus Fasern zwischen der weiteren Lotplattierung des ersten Blechs und der Lotplattierung des dritten Blechs angeordnet wird. In dem Schritt des Verlöten kann somit ferner die weitere Lotplattierung des ersten Blechs und die Lotplattierung des dritten Blechs verlötet werden, so dass die Fasern der weiteren Schicht stoffschlüssig mit dem ersten Blech und dem dritten Blech verbunden werden. Die weitere Lotptattierung des ersten Blechs sowie die Lotplattierung des dritten Blechs können aus dem bleichen Material wie die im Vorgehenden erläuterten Lotplattierungen gebildet sein, Beispielsweise kann die weitere Lotplattierung in einem weiteren Arbeitsschritt auf das erste Blech aufgebracht werden. Alternativ kann das erste Blech auch in einem einzigen Arbeitsschritt in seiner Gesamtheit mit der Lotplattierung ummantelt werden. Die Fasern der weiteren Schicht können aus demselben Material wie die Fasern der ersten Schicht gebildet sein. Der Stapel kann auch beliebig bzw. nach Kundenspezifikation um weitere mit Lotplattierungen versehene Bleche und weitere Faserschichten erweitert werden, wobei die Bleche und Faserschichten jeweils abwechselnd aufeinander angeordnet werden können und die oberste und unterste Schicht jeweils von einem Blech aus dem Metall gebildet werden können. So kann der Verbundwerkstoff auf einfache und schnelle Weise so hergestellt werden, dass das fertige Produkt unterschiedlichen Einsatzanforderungen und Kundenwünschen genügen kann.

Ferner kann in dem Schritt des Anordnens ein Kalium-Aluminium umfassendes Flussmittel auf die Lotplattierungen aufgebracht werden. Beispielsweise kann es sich bei dem Flussmittel um ein Kaliumfluoraluminatschmelzmittel handeln. Ein derartiges Flussmittel weist den Vorteil auf, dass es nicht korrosiv ist und die Fließeigenschaften des für die Lotplattierungen verwendeten Lotmaterials verbessert, so dass eine homogene und somit sicherere Verbindung zwischen den Blechen hergestellt werden kann. So kann die Lebensdauer des fertigen Verbundwerkstoffs verlängert werden.

Die vorliegende Erfindung schafft ferner einen Verbundwerkstoff mit folgenden Merkmalen:

einem Stapel aus einem ersten Blech aus einem Metall, einem zweiten Blech aus dem Metall und einer Schicht aus Fasern, die stoffschlüssig in einer eine Hauptoberfläche des ersten Blechs und eine Hauptoberfläche des zweiten Blechs verbindenden Lotschicht angeordnet ist.

Beispielsweise dienen das erste und zweite Blech jeweils als Matrix für die Schicht aus Fasern. Die Lotschicht kann z.B. durch Erhitzen und Aufschmelzen der Lotplattierung des ersten Blechs und der Lotplattierung des zweiten Blechs gebildet worden sein. Nach dem Aushärten kann die Lotschicht somit eine stoff- und formschlüssige Verbindung zwischen den Blechen und zwischen der Faserschicht und jedem der Bleche bilden. Der Verbundwerkstoff kann als ein Faserverbundwerkstoff bezeichnet werden.

Gemäß einer Ausführungsform kann das Metall Aluminium umfassen. Beispielsweise kann es sich bei dem Metall um reines Aluminium oder eine Aluminiumlegierung handeln. Aluminium zeichnet sich dadurch aus, dass es eine geringe Dichte und somit ein geringes Gewicht aufweist. Ein Einsatz dieses Materials beispielsweise beim Kraftfahrzeugbau kann somit zu einer Kraftstoffensparung beitragen. Beispielsweise können Aluminiumbleche mit einer Stärke im Bereich von 0,3 mm bis 0,9 mm eingesetzt werden. Ist beispielsweise eine größere Biegefestigkeit des fertigen Verbundwerkstoffs erforderlich, können auch Aluminiumbleche mit einer Stärke zwischen 1 mm und 1,3 mm eingesetzt werden. Gemäß einer Ausführungsform können die Bleche auch unterschiedliche Materialien aufweisen.

Ferner kann ein Material der Fasern ein weiteres Metall, insbesondere Edelstahl, umfassen. So kann in Verbindung mit den Aluminiumblechen ein rein metallischer Verbundwerkstoff gebildet werden. Dieser weist die Vorteile einer guten Wärmeleitung, einer hohen Hitzebeständigkeit und einer hohen Bruchfestigkeit auf. Edelstahl zeichnet sich durch eine besonders hohe Zugfestigkeit aus, die durch eine Ausbildung von Fasern mit einem sehr geringen Querschnitt noch weiter erhöht werden kann. Bevorzugt können die Fasern eine Fadenstärke von 0,01 mm bis 0,25 mm aufweisen.

Gemäß einer weiteren Ausführungsform können die Fasern ein Gewebe bilden. Beispielsweise können die Fasern zur Bildung des Gewebes im rechten Winkel überkreuzt zueinander angeordnet sein. So weist der fertige Verbundstoff eine in vier Richtungen gleich ausgeprägte Zugfestigkeit auf. Alternativ können die Fasern auch parallel zueinander angeordnet sein, falls eine besonders hohe Zugfestigkeit in nur eine Richtung erwünscht ist. Die Anordnung einer Vielzahl von Fasern in einem Gewebe bietet den weiteren Vorteil, dass eventuelle einzelne Materialfehler in einzelnen Fasern durch die Redundanz kompensiert werden können.

Gemäß einer weiteren Ausführungsform können das erste und das zweite Blech jeweils eine korrespondierende dreidimensionale Verformung aufweisen. Die dazwischenliegende Faserschicht kann durch ihre bestehende Flexibilität ohne weiteres an die vorgeformten Bleche angepasst werden. In der Folge weist der Verbundstoff mit Entnahme aus dem Ofen bereits die endgültige Form auf und muss nicht mehr in einem weiteren Arbeitsschritt umgeformt werden.

Auch können die Lotplattierungen oder die Lotschicht Silizium-Aluminium aufweisen. Die Verwendung dieser chemischen Verbindung für die Lotschicht bietet den Vorteil, dass sie den Schmelzpunkt des Lots senkt, so dass das Verfahren auch bei niedrigeren Ofentemperaturen durchgeführt werden kann.

Vorteilhafte Ausführungsbeispiele der vorliegenden Erfindung werden nachfolgend Bezug nehmend auf die beiliegenden Zeichnungen näher erläutert. Es zeigen:

In der nachfolgenden Beschreibung der bevorzugten Ausführungsbeispiele der vorliegenden Erfindung werden für die in den verschiedenen Zeichnungen dargestellten und ähnlich wirkenden Elemente gleiche oder ähnliche Bezugszeichen verwendet, wobei eine wiederholte Beschreibung dieser Elemente weggelassen wird.

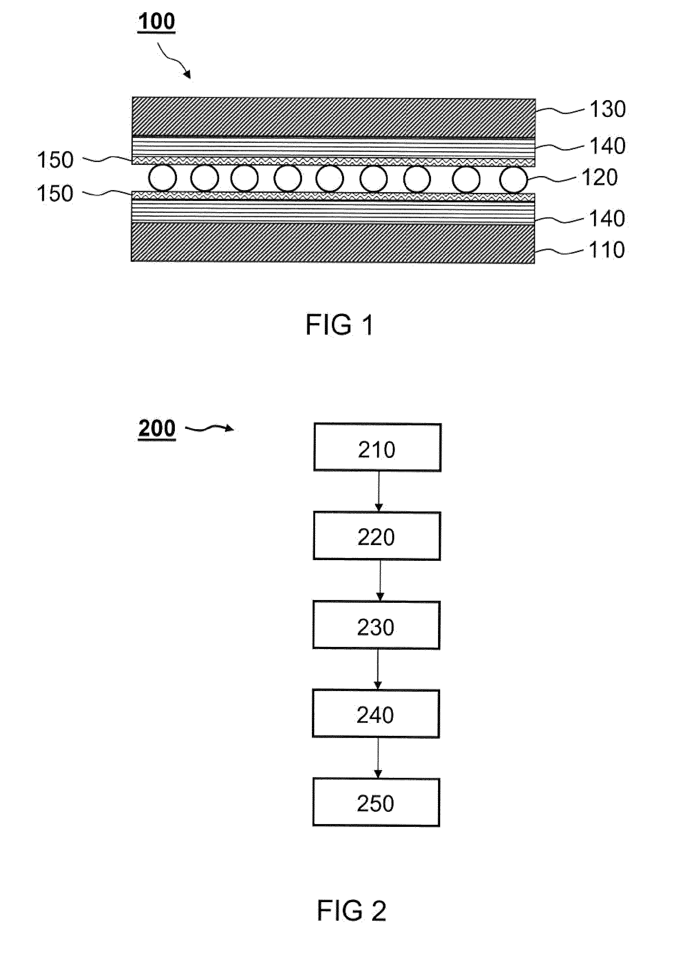

Fig. 1 zeigt in einer Schnittdarstellung einen Ausschnitt aus einem Stapel 100 im Sandwichaufbau vor einer Lötung, gemäß einem Ausführungsbeispiel der vorliegenden Erfindung. Gezeigt ist eine Stapelanordnung aus einem ersten Blech 110 aus einem Aluminiumgrundwerkstoff, einer Schicht aus Fasern 120 und einem zweiten Blech 130 aus dem Aluminiumgrundwerkstoff. Auf eine der Schicht aus Fasern 120 zugewandte Hauptoberfläche des ersten Blechs 110 und zweiten Blechs 130 ist jeweils eine Lotplattierung 140 aufgebracht. Auf eine der Schicht aus Fasern 120 zugewandte Obedläche der Lotplattierungen 140 wiederum ist jeweils eine Schicht aus einem Flussmittel 150 aufgetragen. Die Fasern 120 bilden in ihrer Gesamtheit ein Edelstahlgewebe und sind in der Darstellung in Fig. 1 in einem Faserquerschnitt gezeigt. Der Übersichtlichkeit halber ist lediglich eine der Fasern 120 mit einem Bezugszeichen versehen.

In anderen Worten ausgedrückt bildet hierbei das Leichtmetall Aluminium die in Form der Bleche 110, 130 bestehende Matrix, in die nach dem nachstehend beschriebenen Herstellungsverfahren das feine Edelstahigewebe eingebettet und stoffschlüssig mit derselben verbunden werden kann. Zwischen die zwei Aluminiumbleche 110, 130 mit Silizium-Aluminium-Lotplattierung 140 auf dem Aluminiumgrundwerkstoff wird die Flussmittelbeschichtung 150 aufgebracht und das feine Edelstahlgewebe eingelegt. Unter geringem Pressdruck wird dieses Sandwich nun im Schutzgaslätprozess gelötet. Das Lot verbindet dann die beiden Bleche 110, 130 und schließt das Edelstahlgewebe dazwischen ein. Als die Aluminiummatrix wird hier lotplattiertes Aluminium mit einer Lotplahierungsdicke von 10% der Grundwerkstoffdicke eingesetzt. Auf diese Oberfläche werden dann 5-15g/m² Kaliumaluminium-Flussmittel 150 appliziert. Dieses Flussmittel 150 wird mit einem Polyurethan-Bindemittel von < 5% Organik im Trockenfilm fixiert.

Das Edelstahlgewebe hat eine Faserstärke von 30µm bei einer Maschenweite von 300µm. Das Edeistahigewebe muss kurz vor der Lötung mit einer speziellen Säurenmischung gebeizt werden, um die Oberfläche für die Aluminium-Silizium-Lot-Diffusion vorzubereiten.

Eine weitere bevorzugte Vorbereitung der Edelstahlfaser ist es, diese in oder mit flüssigem Aluminium zu konditionieren. Besonders bevorzugt kann dies mit oder in einer Legierung aus Aluminium und Silizium erfolgen, deren Schmelzpunkt etwa dem des verwendbaren Lots entspricht.

Unter bestimmten Bedingungen wird nun eine Lötverbindung zwischen den Edelstahlfasern 120 und einer Aluminiumknetlegierung durch eine Aluminiumsiliziumlötung erreicht. Als Lötverfahren wird hier das sogenannte Schutzgas-Hartlöten unter Verwendung des Kalium-Aluminium-Flussmittels 150 herangezogen.

Fig. 2 zeigt ein Ablaufdiagramm eines Verfahrens 200 zum Herstellen eines metallischen Faserverbundwerkstoffes in Form von Edeistahifasern in Aluminiummatrix, gemäß einem Ausführungsbeispiel der vorliegenden Erfindung. In einem Schritt 210 wird ein erstes Metallblech mit einer Lotplaflierung auf einer Hauptoberfläche bereitgestellt. In einem Schritt 220 wird ein zweites Metallblech bereitgestellt, das ebenfalls mit einer Lotplattierung auf einer Hauptoberfläche versehen ist. In einem Schritt 230 wird eine Schicht aus Fasern, z.B. Edelstahlfasern, bereitgestellt, die z.B. in Form eines Fasergewebes vorliegen kann. Die Schritte 210, 220, und 230 des Bereitstellens können auch in einer anderen Reihenfolge oder parallel erfolgen. In einem anschließenden Schritt 240 werden nun das erste Metallblech, das zweite Metallblech und die Faserschicht so zueinander angeordnet, dass alle Elemente einen Stapel bilden, der so angeordnet ist, dass sich die Schicht aus Fasern zwischen der Lotplattierung des ersten Metallblechs und der Lotplattierung des zweiten Metallblechs befindet. In einem Schritt 250 wird der Verbundwerkstoff hergestellt, indem die Lotplattierungen des ersten und zweiten Metallblechs so miteinander verlötet werden, dass die Fasern stoffschlüssig mit dem ersten und dem zweiten Metallblech verbunden werden. Beispielsweise kann der Schritt 250 durch Befördern des Stapels durch einen Durchlaufofen in einer Schutzgasatmosphäre erfolgen. Der Ofen kann zur korrekten Durchführung des Verfahrens 200 eine Temperatur aufweisen, die unter dem Schmelzpunkt der Metallbleche und der Fasern und über dem Schmelzpunkt der Lotplattierungen liegt.

Werden die Prozessschritte 210, 220, 230, 240, 250 korrekt eingehalten, wird durch den Lötprozess eine stoffschlüssige Verbindung zwischen den beiden Aluminiumblechen, dem Aluminiumsiliziumlot und den Edelstahlfasern erreicht.

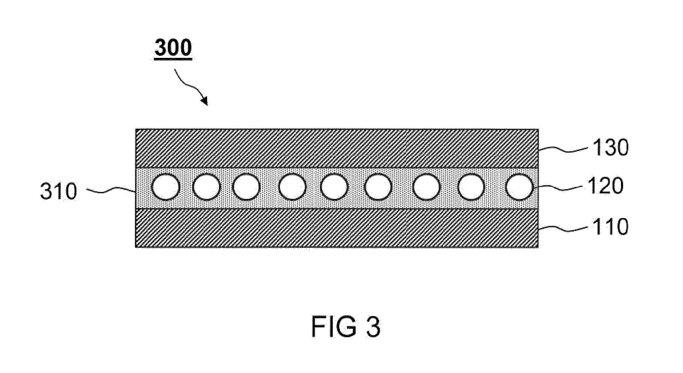

Fig.3 zeigt in einer weiteren Schnittdarstellung den Sandwichaufbau aus Fig. 1 nach der Lötung. Gezeigt ist ein Ausschnitt aus einem Verbundwerkstoff 300 aus dem ersten Blech 110, den von einem Lot 310 umgebenen Fasern 120 und dem zweiten Blech 130. Die Darstellung in Fig. 3 zeigt, dass entsprechend einer verwendeten geeigneten Prozesstemperatur sowohl die Bleche 110 und 130 aus dem Aluminiumgrundwerkstoff als auch die Fasern 120 des Edelstahlgewebes unverändert aus dem Lötprozess hervorgegangen sind. Hingegen haben sich die in Fig. 1 gezeigten Lotpiattierungen und Flussmittelschichten entsprechend ihres unterhalb der Prozesstemperatur liegenden Schmelzpunktes zu einer flüssigen Phase aus Lotmaterial 310 verbunden, das sämtliche Hohlräume um die einzelnen Fasern 120 herum geschlossen hat. Nach dem Aushärten ist so durch das Lot 310 eine stoffschlüssige Verbindung zwischen den Blechen 110, 130 und den Fasern 120 geschaffen.

Diese Verbindung verleiht dem in Fig. 3 gezeigten Sandwich eine hohe Festigkeit

Gemäß einem Ausführungsbeispiel ist es möglich, ein Sandwichpaket aufzubauen, wobei Edelstahlgewebe mit dünnen Aluminiumblechen abwechselnd gestapelt werden. Dieses gesamte Paket wird gepresst und dann im Schmutzgaslötprozess verlötet.

Es ist auch möglich, vorgeformte Aluminiumbleche mit dem Edelstahlgewebe zu belegen und dann zu verlöten.

Im Folgenden werden bevorzuge Herstellungs- und Prozessparameter im Zusammenhang mit dem hier vorgestellten Verfahren und Verbundwerkstoff vorgestellt.

Bevorzugt wird ein Edelstahlgewebe aus dem Werkstoff 1.4401 mit einer Fadenstärke von 0,03mm und einer Maschenweite von 0,3mm verwendet. Die Fadenstärke steht mit der Maschenweite in einem bevorzugten Verhältnis von 1:10, kann aber auch in einem Verhältnis von 1:5 bis 1:30 vorliegen. Weitere Gewebe mit Fadenstärke von 40 bis 200µm sind einsetzbar.

Zur Vorbehandlung wird das Edelstahlgewebe je nach Fadenstärke kurzzeitig 10 bis 180 Sekunden in einer Säurenmischung aus 75% (65%) konzentrierter Salpetersäure, 5% (40%iger) Flusssäure und 20% VE-Wasser gebeizt.

Für die Aluminiummatrix werden bevorzugt Aluminiumbleche mit einer Stärke von 0,6mm und einer Lotplattierdicke von 0,06mm eingesetzt. Weitere verwendete Größen sind 1mm starke Bleche mit 0,1mm Lotplattierung. Für eine Fadenstärke von 30µm sind mindestens 0,3mm starke Bleche mit einer Lotplattierung von 0,03mm erforderlich.

Die Lotplattierung ist bevorzugt ein Aluminium-Silizium-Hartlot mit 8-14% Silizium, beschichtet mit 4-20g/m² Kaliumaluminiumflussmittel.

Das Sandwich aus Edetstahtgewebe und Aluminiumblech wird dann in ein Löstgestell gespannt und mit dem Schutzgaslötverfahren im Durchlaufofen verlötet.

Bevorzugte Prozessparameter der Lötung sind wie folgt.

Für die Prozessgröße der Vorheizzone beträgt die Solltemperatur 300°C für eine Zeitdauer von 15 Minuten. Für das Offsetsegment 1 beträgt die Solltemperatur 5°C.

Für die Lötzone Segment 1 sind die bevorzugten Prozessparameter an der Seite 700°C, für die Muffel 605°C bei einer Zeit von 2 Minuten 30 Sekunden und einer Ventilatordrehzahl von 550 und unten 710°C.

Für die Lötzone Segment 2 sind die bevorzugten Prozessparameter an der Seite 700°C, für die Muffel 595°C bei einer Zeit von 2 Minuten 30 Sekunden und einer Ventilatordrehzahl von 550 und unten 705°C.

Für die Lötzone Segment 3 sind die bevorzugten Prozessparameter an der Seite 685°C, für die Muffel 595°C bei einer Zeit von 2 Minuten 30 Sekunden und einer Ventilatordrehzahl von 550 und unten 690°C.

Für die Lötzone Segment 4 sind die bevorzugten Prozessparameter an der Seite 685°C, für die Muffel 595°C bei einer Zeit von 2 Minuten und einer Ventilatordrehzahl von 400 und unten 695°C.

Und für die Lötzone Segment 5 sind die bevorzugten Prozessparameter an der Seite 685°C, für die Muffel 600°C bei einer Zeit von 2 Minuten und einer Ventilatordrehzahl von 400 und unten 695°C.

Als Alternative zu dem hier vorgestellten Ansatz können Glasfasern oder andere Fasern und Partikel in Aluminiumguss realisiert werden.

Die beschriebenen Ausführungsbeispiele sind nur beispielhaft gewählt und können miteinander kombiniert werden.

## Patentansprüche

1. Verfahren (200) zum Herstellen eines Verbundwerkstoffs (300), mit folgenden Schritten:
Bereitstellen (210) eines ersten Blechs (110) aus einem Metall mit einer auf einer Hauptoberfläche des ersten Blechs aufgebrachten Lotplattierung (140);
Bereitstellen (220) eines zweiten Blechs (130) aus dem Metall mit einer auf einer Hauptoberfläche des zweiten Blechs aufgebrachten Lotplattierung (140);
Bereitstellen (230) einer Schicht aus Fasern (120);
Anordnen (240) des ersten Blechs, des zweiten Blechs und der Schicht aus Fasern in einen Stapel (100), derart dass die Schicht aus Fasern zwischen der Lotplattierung des ersten Blechs und der Lotplattierung des zweiten Blechs angeordnet wird; und
Verlöten (240) der Lotplattierung des ersten Blechs und der Lotplattierung des zweiten Blechs, so dass die Fasern stoffschiüssig mit dem ersten Blech und dem zweiten Blech verbunden werden, um den Verbundwerkstoff herzustellen.

2. Verfahren (200) gemäß Anspruch 1, bei dem der Schritt des Verlötens (240) in Form eines Schutzgas-Hartlötprozesses erfolgt.

3. Verfahren (200) gemäß einem der vorangegangenen Ansprüche, bei dem in dem Schritt des Bereitstellens (210) des ersten Blechs (110) das erste Blech ferner mit einer auf einer gegenüberliegenden Hauptoberfläche aufgebrachten weiteren Lotplattierung bereitgestellt wird, und mit einem Schrift des Bereitstellens eines dritten Blechs aus dem Metall mit einer auf einer Hauptoberfläche des dritten Blechs aufgebrachten Lotplattierung und einem Schritt des Bereitstellens einer weiteren Schicht aus Fasern, wobei in dem Schritt des Anordnens (240) der Stapel um das dritte Blech und die weitere Schicht aus Fasern erweitert wird, indem die weitere Schicht aus Fasern zwischen der weiteren Lotplattierung des ersten Blechs und der Lotplattierung des dritten Blechs angeordnet wird, und wobei in dem Schritt des Verlötens (250) ferner die weitere Lotplattierung des ersten Blechs und die Lotplattierung des dritten Blechs verlötet werden, so dass die Fasern der weiteren Schicht stoffschlüssig mit dem ersten Blech und dem dritten Blech verbunden werden.

4. Verfahren (200) gemäß einem der vorangegangenen Ansprüche, bei dem in dem Schritt des Anordnens (240) ein Kalium-Aluminium umfassendes Flussmittel (150) auf die Lotpfattierungen (140) aufgebracht wird.

5. Verbundwerkstoff (300) mit folgenden Merkmalen:
einem Stapel aus einem ersten Blech (110) aus einem Metall, einem zweiten Blech (130) aus dem Metall und einer Schicht aus Fasern (120), die stoffschlüssig in einer eine Hauptoberfläche des ersten Blechs und eine Hauptoberfläche des zweiten Blechs verbindenden Lotschicht (310) angeordnet ist.

6. Verfahren (200) oder Verbundwerkstoff (300) gemäß einem der vorangegangenen Ansprüche, bei dem das Metall Aluminium umfasst.

7. Verfahren (200) oder Verbundwerkstoff (300) gemäß einem der vorangegangenen Ansprüche, bei dem ein Material der Fasern (120) Edelstahl umfasst.

8. Verfahren (200) oder Verbundwerkstoff (300) gemäß einem der vorangegangenen Ansprüche, bei dem die Fasern (120) ein Gewebe bilden.

9. Verfahren (200) oder Verbundwerkstoff (300) gemäß einem der vorangegangenen Ansprüche, bei dem das erste (110) und das zweite (130) Blech jeweils eine korrespondierende dreidimensionale Verformung aufweisen.

10. Verfahren (200) oder Verbundwerkstoff (300) gemäß einem der vorangegangenen Ansprüche, bei dem die Lotplattierungen (140) oder die Lotschicht (310) Silizium-Aluminium aufweisen.
